# DEMANDE DE BREVET EUROPEEN

(11) **EP 1 161 875 A1**
(43) Date de publication de la demande: **12.12.2001**
(21) Numéro de dépôt: 01401463.3
(22) Date de dépôt: 06.06.2001
(51) Int. Cl.: A22C 7/00

(54) **Machine pour rouler des tranches de jambon**

(30) Priorité: 08.06.2000 FR 0007368
(71) Demandeur: Les Salaisons de Brocéliande, 14310 Villers Bocage (FR)
(72) Inventeur: Coutard, André, 14310 Villers Bocage (FR)
(74) Mandataire: Rémont, Claude

(57) **Abrégé**

La machine (1) comporte :
- plusieurs réceptacles (11) montés de façon à être déplacés le long d'une trajectoire (12) en circuit fermé;
- pour chaque réceptacle (11), un mandrin (13) adapté à être déplacé avec le réceptacle correspondant le long de ladite trajectoire (12) et comprenant des moyens (14) pour recevoir l'extrémité avant (2a) d'une tranche de jambon (2);
- des moyens pour faire tourner chaque mandrin (13) à l'intérieur du réceptacle (11) correspondant pour enrouler ladite tranche de jambon (2) autour dudit mandrin (13);
- des moyens pour déplacer axialement chaque mandrin (13) après enroulement d'une tranche de jambon (2) pour éloigner ledit mandrin (13) de l'intérieur du réceptacle (11) correspondant afin de libérer ladite tranche de jambon roulée (5);
- des moyens pour évacuer chaque tranche de jambon roulée (5) du réceptacle (11) correspondant au poste de déchargement (6) de la machine (1).

## Description

La présente invention concerne une machine pour rouler des tranches de jambon amenées à plat sur un transporteur amont à un poste de chargement de ladite machine, et pour délivrer des tranches de jambon roulées à un poste de déchargement de ladite machine.

La présente invention concerne également un système pour recevoir des tranches de jambon à plat et pour fournir des tranches de jambon roulées contenues chacune dans une alvéole individuelle d'un emballage comprenant plusieurs alvéoles fermées chacune par une pellicule détachable, ainsi qu'un emballage pour tranches de jambon, comportant plusieurs alvéoles contenant chacune une tranche de jambon roulée et recouvertes chacune d'une pellicule détachable.

Les tranches de jambon offertes à la vente en libre service sont présentées à plat dans un emballage constitué par une alvéole de faible profondeur ayant une superficie au moins égale à celle des tranches de jambon, cette alvéole étant fermée par une pellicule étanche. L'atmosphère à l'intérieur de l'alvéole est en général une atmosphère contrôlée qui facilite la conservation des tranches de jambon.

Ce système présente l'inconvénient que lorsque la pellicule de fermeture a été détachée, toutes les tranches de jambon se trouvent exposées à l'air, de sorte que la qualité des tranches de jambon qui ne sont pas consommées immédiatement se détériore très rapidement.

La Demanderesse a alors cherché à offrir à la vente des tranches de jambon présentées chacune dans un emballage individuel constitué par une alvéole fermée par une pellicule détachable.

Le coût d'un emballage individuel pour une tranche de jambon présentée à plat étant trop élevé pour être accepté par les consommateurs, la Demanderesse a cherché à présenter chaque tranche de jambon dans une position roulée sur elle-même à l'intérieur d'une alvéole allongée ayant une section transversale correspond sensiblement à l'encombrement d'une tranche de jambon roulée, chaque emballage comportant plusieurs alvéoles séparables l'une de l'autre.

La Demanderesse n'ayant pas trouvé sur le marché d'alternative à la solution consistant à rouler manuellement chaque tranche de jambon, le but de l'invention est de proposer une machine du type précité qui puisse être facilement utilisée et nettoyée tout en étant de structure simple et de fonctionnement fiable.

Suivant la présente invention, la machine du type précité est caractérisée en ce qu'elle comporte:
- plusieurs réceptacles en forme d'auges montés de façon à être déplacés le long d'une trajectoire en circuit fermé allant dudit poste de chargement audit poste de déchargement et revenant au poste de chargement;
- sensiblement dans l'axe de chaque réceptacle, un moyen formant mandrin adapté à être déplacé avec le réceptacle correspondant le long de ladite trajectoire, chaque mandrin comprenant des moyens pour recevoir l'extrémité avant d'une tranche de jambon;
- des moyens pour faire tourner chaque mandrin sensiblement autour de son axe à l'intérieur du réceptacle correspondant pour enrouler ladite tranche de jambon autour dudit mandrin dès que l'extrémité avant de ladite tranche a été reçue par les moyens de réception dudit mandrin;
- des moyens pour déplacer axialement chaque mandrin après enroulement d'une tranche de jambon pour éloigner ledit mandrin de l'intérieur du réceptacle correspondant afin de libérer ladite tranche de jambon roulée;
- des moyens pour évacuer chaque tranche de jambon roulée du réceptacle correspondant au poste de déchargement de la machine.

Le mandrin tournant sensiblement autour de son axe à l'intérieur du réceptacle correspondant permet de rouler une tranche de jambon sur elle-même en guidant cette tranche de manière à éviter toute détérioration de ladite tranche. Ensuite, l'éloignement du mandrin permet le transport et l'évacuation de chaque tranche de jambon roulée.

D'autres particularités et avantages de la présente invention apparaîtront dans la description détaillée ci-après.

Aux dessins annexés, donnés uniquement à titre d'exemples non limitatifs:
- la figure 1 est une vue schématique en élévation d'une machine selon un mode de réalisation de la présente invention;
- la figure 2 est une vue schématique de dessus du mode de réalisation de la figure 1;
- la figure 3 est un schéma synoptique très simplifié illustrant un système pour fournir des tranches de jambon roulées et emballées comprenant une machine selon le mode de réalisation des figures 1 et 2;
- la figure 4 est une vue schématique en perspective d'un emballage, obtenu par mise en oeuvre du système de la figure 3, cet emballage comportant plusieurs alvéoles contenant chacune une tranche de jambon roulée.

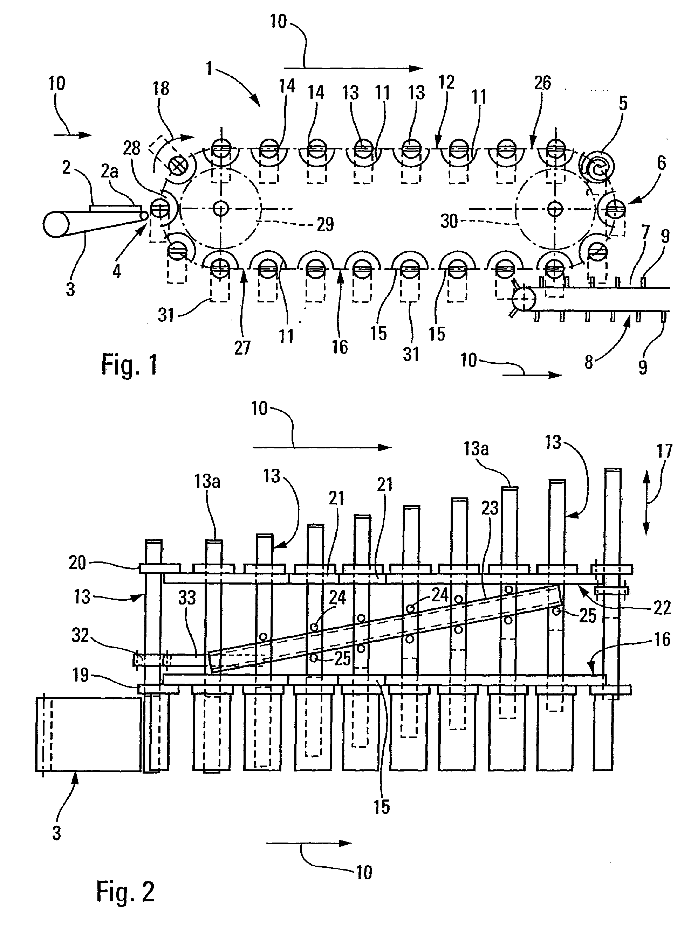

Dans le mode de réalisation des figures 1 et 2, on a représenté une machine 1 pour rouler des tranches de jambon 2 amenées à plat sur un transporteur amont 3 à un poste de chargement 4 de ladite machine 1, et pour délivrer des tranches de jambon roulées 5 à un poste de déchargement 6 de ladite machine.

Dans cet exemple, chaque tranche de jambon roulée 5 est déposée dans une alvéole 7 d'un transporteur aval 8 comportant, par exemple, des tasseaux 9 délimitant lesdites alvéoles 7.

Les tranches de jambon 2, puis roulées 5 se déplacent ainsi en permanence dans le sens des flèches 10, de la gauche vers la droite aux figures 1 et 2.

Selon la présente invention, la machine 1 comporte:
- plusieurs réceptacles 11 en forme d'auge montés de façon à être déplacés le long d'une trajectoire, schématisée par le trait discontinu 12, en circuit fermé allant du poste de chargement 4 au poste de déchargement 6 et révenant au poste de chargement 4;
- sensiblement dans l'axe de chaque réceptacle 11, un moyen formant mandrin 13 adapté à être déplacé avec le réceptacle 11 correspondant le long de ladite trajectoire 12, chaque mandrin 13 comprenant des moyens 14 pour recevoir l'extrémité avant 2a d'une tranche de jambon 2;
- des moyens pour faire tourner chaque mandrin 13 sensiblement autour de son axe à l'intérieur du réceptacle 11 correspondant pour enrouler ladite tranche de jambon 2 autour dudit mandrin 13 dès que l'extrémité avant 2a de la tranche 2 a été reçue par les moyens de réception 14 du mandrin 13;
- des moyens pour déplacer axialement chaque mandrin 13 après enroulement d'une tranche de jambon 2 pour éloigner ledit mandrin 13 de l'intérieur du réceptacle 11 correspondant afin de libérer ladite tranche de jambon roulée 5;
- des moyens pour évacuer chaque tranche de jambon roulée 5 du réceptacle 11 correspondant au poste de déchargement 6 de la machine 1.

Comme schématisé aux figures 1 et 2, chaque mandrin 13 présente à son extrémité libre 13a adaptée à être introduite à l'intérieur du réceptacle 11 correspondant, une fente longitudinale 14 sensiblement axiale adaptée à recevoir l'extrémité avant 2a d'une tranche de jambon 2.

Dans l'exemple représenté, chaque réceptacle 11 a une forme sensiblement hémi-cylindrique bien adaptée à guider une tranche de jambon 2 pendant son enroulement autour du mandrin 13 du fait de la rotation dudit mandrin 13 à l'intérieur dudit réceptacle 11.

D'autres formes plus complexes, en particulier plus enveloppantes, sont évidemment possibles pour assurer un guidage des tranches de jambon 2 sur un angle supérieur à 180° autour du mandrin 13.

Dans le mode de réalisation représenté, chaque réceptacle 11 est monté sur un maillon, schématisé en 15, d'au moins une chaîne sans fin 16 définissant ladite trajectoire 12 en circuit fermé.

Chaque mandrin 13 est mobile axialement, selon la flèche 17 à la figure 2, et en pivotement, selon la flèche 18 à la figure 1, par rapport à au moins un palier 19 solidaire du réceptacle 11 correspondant.

Dans le mode de réalisation représenté, chaque réceptacle 11 hémi-cylindrique est soudé en porte-à-faux sur un palier 19 fixé à un maillon 15 d'une première chaîne sans fin 16.

Chaque mandrin 13 est mobile axialement et en pivotement par rapport au palier 19 correspondant et à un second palier 20 correspondant fixé sur un maillon 21 d'une seconde chaîne sans fin 22.

Pour déplacer axialement chaque mandrin 13 par rapport aux paliers 19, 20 correspondants, la machine 1 comprend des moyens formant cames 23 adaptés à coopérer avec au moins un galet de came 24 de chaque mandrin 13 de façon à déplacer axialement, selon la flèche 17, chaque mandrin 13 pour l'extraire du réceptacle 11 correspondant sur le brin allée 26 et pour le ramener à l'intérieur dudit réceptacle 11 correspondant sur le brin retour 27 de la trajectoire 12.

Dans l'exemple représenté, une came 23 unique, constituée par un guide rectiligne disposé en biais par rapport à la direction 10 des deux brins allée 26 et retour 27 de la trajectoire 12.

La came 23 coopère, pour chaque mandrin 13, avec un galet de came 24 du brin allée 26 et un galet de came 25 du brin retour 27 disposé sur chaque mandrin 13 de part et d'autre de la came 23.

La machine 1 comprend, au voisinage du poste de chargement 4 et du poste de déchargement 6, des moyens pour faire pivoter chaque réceptacle 11 de façon à orienter l'ouverture 28 de chaque réceptacle 11 respectivement vers le transporteur amont 3 amenant les tranches de jambon à plat 2 et vers la direction 10 d'évacuation des tranches de jambon roulées 5.

Dans l'exemple représenté aux figures, chaque réceptacle 11 est fixé à demeure sur les maillons 15, 21 correspondants de façon que son ouverture 28 soit en permanence dirigée radialement vers l'extérieur de la chaîne correspondant 16, 22.

Dans cet exemple, chaque chaîne sans fin 16, 22 passe autour d'une poulie amont 29 et d'une poulie aval 30, le poste de chargement 4 et le poste de déchargement 6 étant bien entendu aménagés à proximité immédiate du parcours de chaque réceptacle 11 respectivement au niveau des poulies amont 29 et des poulies aval 30.

Chaque mandrin 13 comporte un contrepoids 31 placé de manière à maintenir ledit mandrin 13 dans une position constante en l'absence de toute autre sollicitation.

Les moyens pour faire tourner chaque mandrin 13 de façon à enrouler une tranche de jambon 2 sont conçus pour faire tourner ledit mandrin 13 à une vitesse prédéterminée qui correspond au moins à la vitesse d'amenée des tranches de jambon 2 et à raison d'un nombre de tours prédéterminé suffisant pour enrouler complètement chaque tranche de jambon 2.

Dans l'exemple représenté, chaque mandrin 13 est solidaire en rotation d'un pignon 32 adapté à venir en prise avec une roue dentée 33 placée devant le poste de chargement 4. Le rapport entre le nombre de dents de la roue dentée 33 et celui de chaque pignon 32, d'une part, et la vitesse de rotation de la roue dentée 33, d'autre part, sont prédéterminés de façon à faire tourner chaque mandrin 13 à ladite vitesse et selon ledit nombre de tours prédéterminés.

Avantageusement, le transporteur amont 3 amène une tranche de jambon 2 à plat dont l'extrémité avant traverse la fente longitudinale 14 du mandrin 13 jusqu'à atteindre la paroi du réceptacle 11 correspondant, alors que la machine 1 est à l'arrêt.

Puis la machine 1 est avancée d'un pas pour enrouler ladite tranche 2 autour dudit mandrin 13 et pour présenter devant le transporteur amont 3 un nouveau réceptacle 11 vide prêt à recevoir une nouvelle tranche de jambon.

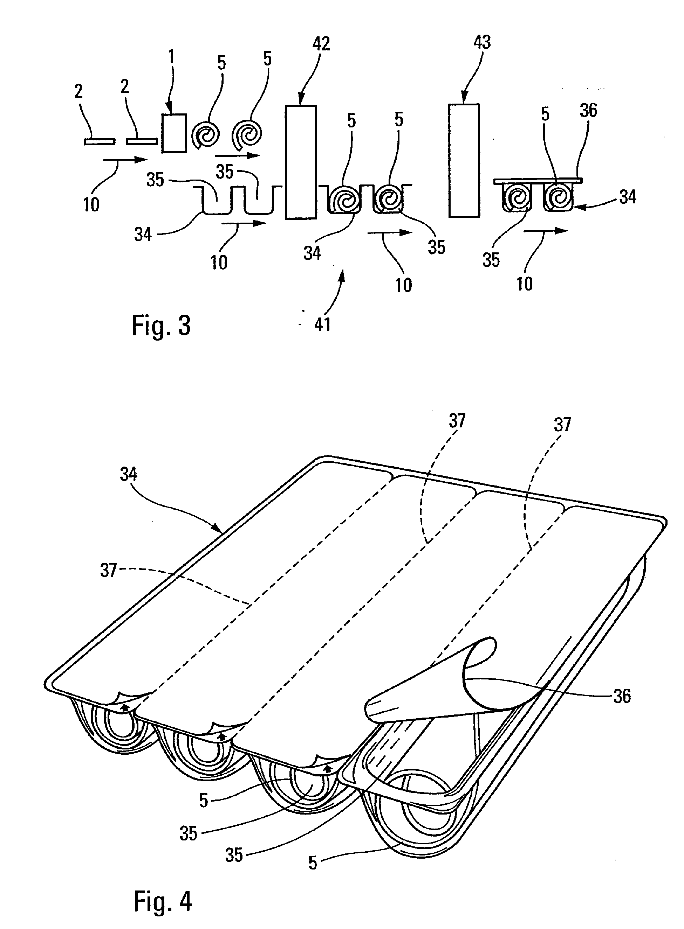

On a représenté schématiquement à la figure 4 un emballage 34 pour tranches de jambon roulées 5. L'emballage 34 comporte plusieurs alvéoles 35 contenant chacune une tranche de jambon roulée 5, et recouvertes chacune d'une pellicule détachable 36.

Une ligne de rupture préférentielle, schématisée en 37, est de préférence ménagée, d'une façon connue classique qu'il est inutile de préciser ici, entre deux alvéoles 35 adjacentes pour permettre de séparer facilement, par cassure de l'emballage au niveau de chaque ligne de rupture préférentielle 37, une alvéole 35 du reste de l'emballage 34, ce qui permet, après détachement de la pellicule détachable 36, de consommer une tranche de jambon roulée 5 tout en maintenant les autres tranches de jambon 5 protégées par le reste de l'emballage 34 dans leur état de conservation initial.

Un tel emballage peut être réalisé dans un système, schématisé en 41 à la figure 3, pour recevoir des tranches de jambon à plat 2 et pour fournir des tranches de jambon roulées 5 contenues chacune dans une alvéole individuelle 35 d'un emballage 34 comprenant plusieurs alvéoles 35 fermées chacune par une pellicule détachable 36.

Le système 41 schématisé à la figure 3 comporte:
- une machine, schématisée par un rectangle, constitué par une machine 1 pour rouler des tranches de jambon 2 du type décrit ci-dessus;
- des moyens, schématisés par le rectangle 42, pour amener une tranche de jambon roulée 5 dans chacune des alvéoles 35 d'un emballage 34 comprenant plusieurs alvéoles 35;
- des moyens, schématisés par le rectangle 43, et connus en eux-mêmes, pour recouvrir chaque alvéole 35 d'une pellicule détachable 36; les tranches de jambon 2, 5 se déplaçant de l'amont vers l'aval dans le sens schématisé par la flèche 10, de la gauche vers la droite de la figure.

Bien entendu, la présente invention n'est pas limitée aux modes de réalisation que l'on a décrits ci-dessus, et on peut effectuer sur ceux-ci de nombreux changements et modifications sans sortir du domaine de l'invention.

## Revendications

1. Machine (1) pour rouler des tranches de jambon (2) amenées à plat sur un transporteur amont (3) à un poste de chargement (4) de ladite machine (1) et pour délivrer des tranches de jambon roulées (5) à un poste de déchargement (6) de ladite machine (1), **caractérisée en ce qu'**elle comporte :
- plusieurs réceptacles (11) en forme d'auges montés de façon à être déplacés le long d'une trajectoire (12) en circuit fermé allant dudit poste de chargement (4) audit poste de déchargement (6) et revenant au poste de chargement (4);
- sensiblement dans l'axe de chaque réceptacle (11), un moyen formant mandrin (13) adapté à être déplacé avec le réceptacle (11) correspondant le long de ladite trajectoire (12), chaque mandrin (13) comprenant des moyens (14) pour recevoir l'extrémité avant (2a) d'une tranche de jambon (2);
- des moyens pour faire tourner chaque mandrin (13) sensiblement autour de son axe à l'intérieur du réceptacle (11) correspondant pour enrouler ladite tranche de jambon (2) autour dudit mandrin (13) dès que l'extrémité avant (2a) de ladite tranche (2) a été reçue par les moyens de réception (14) dudit mandrin (13);
- des moyens pour déplacer axialement chaque mandrin (13) après enroulement d'une tranche de jambon (2) pour éloigner ledit mandrin (13) de l'intérieur du réceptacle (11) correspondant afin de libérer ladite tranche de jambon roulée (5);
- des moyens pour évacuer chaque tranche de jambon roulée (5) du réceptacle (11) correspondant au poste de déchargement (6) de la machine (1).

2. Machine selon la revendication 1, **caractérisée en ce que** chaque mandrin (13) présente à son extrémité libre (13a) adaptée à être introduite à l'intérieur du réceptacle (11) correspondant une fente longitudinale (14) sensiblement axiale adaptée à recevoir l'extrémité avant (2a) d'une tranche de jambon (2).

3. Machine selon la revendication 1 ou 2, **caractérisée en ce que** chaque réceptacle (11) a une forme sensiblement hémi-cylindrique.

4. Machine selon l'une quelconque des revendications précédentes, **caractérisée en ce que** chaque réceptacle (11) est monté sur un maillon (15) d'au moins une chaîne sans fin (16) définissant ladite trajectoire (12) en circuit fermé.

5. Machine selon l'une quelconque des revendications précédentes, **caractérisée en ce que** chaque mandrin (13) est mobile axialement et en pivotement par rapport à au moins un palier (19) solidaire du réceptacle (11) correspondant.

6. Machine selon la revendication 5, **caractérisée en ce qu'**elle comprend des moyens formant came (23) adaptée à coopérer avec au moins un galet de came (24, 25) de chaque mandrin (13) de façon à déplacer axialement chaque mandrin (13) pour l'extraire du réceptacle (11) correspondant sur le brin aller (26) et pour le ramener à l'intérieur dudit réceptacle (11) correspondant sur le brin retour (27) de la trajectoire (12).

7. Machine selon l'une quelconque des revendications précédentes, **caractérisée en ce qu'**elle comprend au voisinage du poste de chargement (4) et du poste de déchargement (6), des moyens pour faire pivoter chaque réceptacle (11) de façon à orienter l'ouverture (28) dudit réceptacle (11) respectivement vers le transporteur amont (3) amenant des tranches de jambon à plat (2) et vers la direction (10) d'évacuation des tranches de jambon roulées (5).

8. Machine selon la revendication 7, **caractérisée en ce que** chaque mandrin (13) comporte un contrepoids (31) placé de manière à maintenir ledit mandrin (13) dans une position constante en l'absence de toute autre sollicitation.

9. Machine selon l'une quelconque des revendications précédentes, **caractérisée en ce que** les moyens pour faire tourner chaque mandrin (13) de façon à enrouler une tranche de jambon (2) sont conçus pour faire tourner ledit mandrin (13) à une vitesse prédéterminée qui correspond au moins à la vitesse d'amenée des tranches de jambon (2) et à raison d'un nombre de tours prédéterminé suffisant pour enrouler complètement chaque tranche de jambon (2).

10. Machine selon la revendication 9, **caractérisée en ce que** chaque mandrin (13) est solidaire en rotation d'un pignon (32) adapté à venir en prise avec une roue dentée (33) devant le poste de chargement (4), et **en ce que** le rapport entre le nombre de dents de la roue dentée (33) et celui de chaque pignon (32), d'une part, et la vitesse de rotation de la roue dentée (33), d'autre part, sont prédéterminés de façon à faire tourner chaque mandrin (13) à ladite vitesse et selon ledit nombre de tours prédéterminés.

11. Système (41) pour recevoir des tranches de jambon à plat (2) et pour fournir des tranches de jambon roulées (5) contenues chacune dans une alvéole individuelle (35) d'un emballage (34) comprenant plusieurs alvéoles (35) fermées chacune par une pellicule détachable (36), **caractérisé en ce qu'**il comporte:
- une machine (1) selon l'une quelconque des revendications 1 à 10 pour rouler des tranches de jambon (2);
- des moyens (42) pour amener une tranche de jambon roulée (5) dans chacune des alvéoles (35) d'un emballage (34) comprenant plusieurs alvéoles (35);
- des moyens pour recouvrir chaque alvéole (35) d'une pellicule détachable (36).

12. Emballage (34) pour tranches de jambon roulées (5), comportant plusieurs alvéoles (35) contenant chacune une tranche de jambon roulée (5), et recouvertes chacune d'une pellicule détachable (36), **caractérisé en ce qu'**il est obtenu par la mise en oeuvre d'un système (41) selon la revendication 11.
